(19) Europäisches Patentamt
European Patent Office
Office européen des brevets

(11) **EP 4 588 960 A1**

(12) **EUROPEAN PATENT APPLICATION**
published in accordance with Art. 153(4) EPC

(43) Date of publication:
**23.07.2025 Bulletin 2025/30**

(21) Application number: **23879675.9**

(22) Date of filing: **11.10.2023**

(51) International Patent Classification (IPC):
***C08J 3/22*** *(2006.01)* ***B60C 1/00*** *(2006.01)*
***C08K 3/36*** *(2006.01)* ***C08K 5/54*** *(2006.01)*
***C08L 21/00*** *(2006.01)*

(52) Cooperative Patent Classification (CPC):
**B60C 1/00; C08J 3/22; C08K 3/36; C08K 5/54; C08L 21/00**

(86) International application number:
**PCT/JP2023/036871**

(87) International publication number:
**WO 2024/085032 (25.04.2024 Gazette 2024/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.10.2022 JP 2022167049**
**30.03.2023 JP 2023055985**

(71) Applicant: **TOKUYAMA CORPORATION**
**Yamaguchi 745-8648 (JP)**

(72) Inventors:
- **KONDOU, Manabu**
**Shunan-shi, Yamaguchi 745-8648 (JP)**
- **MATSUMOTO, Tomoki**
**Shunan-shi, Yamaguchi 745-8648 (JP)**
- **KUDO, Yasuhiko**
**Shunan-shi, Yamaguchi 745-8648 (JP)**
- **NAKAMURA, Masahiro**
**Shunan-shi, Yamaguchi 745-8648 (JP)**

(74) Representative: **Canzler & Bergmeier Patentanwälte Partnerschaft mbB**
**Despag-Straße 6**
**85055 Ingolstadt (DE)**

(54) **MASTER BATCH, METHOD FOR PRODUCING MASTER BATCH, RUBBER COMPOSITION FOR TIRES, METHOD FOR PRODUCING RUBBER COMPOSITION FOR TIRES, RUBBER MATERIAL FOR TIRES, AND TIRE**

(57) [Problem] To provide: a rubber material for tires which achieves an excellent balance among wear resistance, low fuel consumption and wet grip performance; a master batch and a rubber composition for tires, each of which is suitable for the production of the rubber material for tires; a method for producing the master batch; a method for producing the rubber composition for tires; and a tire which comprises a tire member that is formed of the rubber material for tires. [Solution] A rubber material for tires, the rubber material containing 5 parts by mass to 90 parts by mass of a hydrophilic fumed silica and 1.5 parts by mass to 30 parts by mass of a silane coupling agent relative to 100 parts by mass of the total rubber content that is composed of at least one rubber selected from the group consisting of natural rubbers and synthetic rubbers, wherein the stress at 100% elongation (M100 (MPa)), the tensile strength at break (TB (MPa)) and the tensile elongation at break (EB (%)) of the rubber material for tires satisfy the relational expression described below.

$$4{,}000 \leqslant TB \times EB/M100 \leqslant 13{,}000$$

EP 4 588 960 A1

[Figure 1]

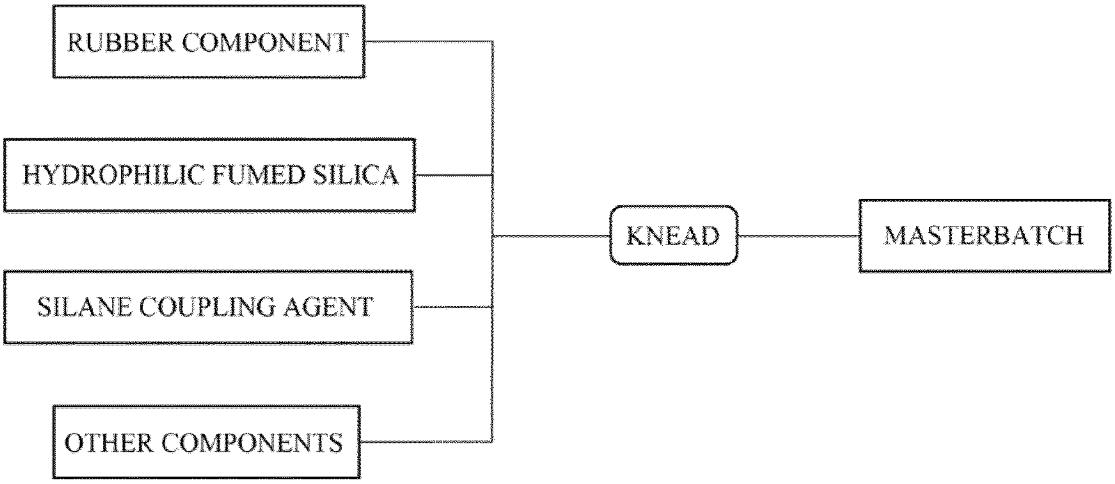
RUBBER COMPONENT
HYDROPHILIC FUMED SILICA
SILANE COUPLING AGENT
OTHER COMPONENTS
KNEAD
MASTERBATCH

## Description

### Technical Field

The present invention relates to a masterbatch, a method for producing a masterbatch, a rubber composition for a tire, a method for producing a rubber composition for a tire, a rubber material for a tire, and a tire. Specifically, the present invention relates to a tire having excellent wear resistance, an excellent wet grip property, and low rolling resistance, and to a material suitable for producing the tire.

### Background Art

In recent years, with an increasing interest in automobile safety, there has been an increasing demand for not only fuel efficiency but also steering stability. In response to this, there is a demand for a tire that satisfies a low heat generation property with reduced rolling resistance, the steering stability on wet and dry road surfaces, and high wear resistance regarding tire performance. In response to these requirements, improvements have been made to a reinforcing filler and a rubber component.

In the related art, carbon black is used as a rubber reinforcing filler. This is because the carbon black can impart high wear resistance to a rubber material for a tire. However, it is difficult to obtain, by using the carbon black alone, a rubber material for a tire having a high level of balance among a wet grip property, the wear resistance, and the fuel efficiency. In order to solve such a problem, silica produced by wet-process is blended instead of the carbon black. However, it is known that when the silica produced by wet-process is used as a filler, a blending amount of the carbon black is relatively reduced, and thus a decrease in breaking strength and wear resistance of the rubber material for a tire is unavoidable. In addition, there are problems that the silica produced by wet-process has poor dispersibility in a rubber, a Mooney viscosity of the rubber material for a tire during kneading is high, and workability by extrusion molding is poor.

Patent Literatures 1 and 2 propose rubber materials for a tire that contain an inorganic compound powder in addition to a rubber component and carbon black and silica produced by wet-process as fillers, for the purpose of obtaining a rubber material for a tire having excellent fuel efficiency and wet grip property without decreasing wear resistance.

However, the rubber materials for a tire described in Patent Literatures 1 and 2 need to be blended with a relatively large amount of the inorganic compound powder in order to fully obtain an effect of improving the wet grip property and the fuel efficiency, and in this case, the wear resistance tends to be easily decreased. Therefore, a rubber material for a tire having a more excellent balance among the wear resistance, the fuel efficiency, and the wet grip property has not been obtained.

In addition, Patent Literature 3 proposes a rubber material for a tire that has improved wear resistance and wet grip property by using a diene-based rubber component, silica produced by wet-process, and carbon black having a specified property such as DBP, $N_2SA$, and a property calculated from two-dimensional projection image analysis of an aggregate. However, the material does not fully satisfy the fuel efficiency in addition to the wear resistance and the wet grip property.

Further, Patent Literature 4 proposes a vulcanized rubber composition having a predetermined relationship among a stress at 300% elongation (M300), a stress at 100% elongation (M100), a tensile strength at break (TB), and a tensile elongation at break (EB). It is disclosed that the vulcanized rubber composition has excellent wear resistance. However, a wet grip property is insufficient, and fuel efficiency is not evaluated at all.

### Citation List

#### Patent Literature

Patent Literature 1: Japanese Patent Laid-Open No. 2005-213353
Patent Literature 2: Japanese Patent Laid-Open No. 2018-150420
Patent Literature 3: Japanese Patent Laid-Open No. 2012-158661
Patent Literature 4: International Publication No. WO2018/128141

### Summary of Invention

#### Technical Problem

For a tire for automobiles, with an increasing interest in automobile safety in recent years, there is a demand for a

tire material not only high in wear resistance and fuel efficiency but also excellent in wet grip property.

However, the rubber materials for a tire described in Patent Literatures 1 to 4 need to be blended with a relatively large amount of the inorganic compound powder in order to fully obtain the effect of improving the wet grip property and the fuel efficiency, and in this case, the wear resistance tends to be easily decreased, and thus a rubber material for a tire having a more excellent balance among the wear resistance, the fuel efficiency, and the wet grip property has not been obtained.

The present invention has been made in view of such circumstances, and an object thereof is to provide a rubber material for a tire having a more excellent balance among wear resistance, fuel efficiency, and a wet grip property, a masterbatch and a rubber composition for a tire suitable for producing the same, methods for producing the masterbatch and the rubber composition for a tire, and a tire including a tire member made of the rubber material for a tire.

Solution to Problem

The present inventors have found that a rubber material for a tire having a more excellent balance among wear resistance, fuel efficiency, and a wet grip property can be obtained by blending hydrophilic fumed silica as a filler in a rubber composition for a tire and making M100, TB, and EB satisfy a predetermined relationship.

However, it has been found that the hydrophilic fumed silica is bulkier than the silica produced by wet-process, and thus in a Banbury mixer usually used for kneading a rubber composition, the hydrophilic fumed silica tends to scatter during kneading, and it is difficult to obtain a rubber composition in which the hydrophilic fumed silica is sufficiently dispersed.

Based on the finding, the present inventors have conducted further intensive studies, and as a result, have found that the above finding can be solved by using a kneading machine having a low rotor rotation speed, which is not usually used for kneading the rubber composition due to productivity.

From the above, aspects of the present invention are as follows.

[1] A masterbatch containing: 13 parts by mass or more and 130 parts by mass or less of hydrophilic fumed silica and 1 part by mass or more and 40 parts by mass or less of a silane coupling agent, with respect to 100 parts by mass of a rubber component containing at least one selected from the group consisting of a natural rubber and a synthetic rubber.

[2] The masterbatch according to [1], in which the hydrophilic fumed silica has a BET specific surface area of 50 $m^2/g$ or more and 500 $m^2/g$ or less.

[3] The masterbatch according to [1] or [2], further containing: 1 part by mass or more and 40 parts by mass or less of a lubricant with respect to 100 parts by mass of the rubber component.

[4] A method for producing a masterbatch including: a step of kneading, using a kneader, a rubber component, hydrophilic fumed silica, and a silane coupling agent.

[5] The method for producing a masterbatch according to [4], in which the hydrophilic fumed silica has a BET specific surface area of 50 $m^2/g$ or more and 500 $m^2/g$ or less.

[6] The method for producing a masterbatch according to [4] or [5], further including: kneading a lubricant.

[7] A rubber composition for a tire containing: 5 parts by mass or more and 90 parts by mass or less of hydrophilic fumed silica and 1.5 parts by mass or more and 30 parts by mass or less of a silane coupling agent, with respect to 100 parts by mass of a total rubber component containing at least one selected from the group consisting of a natural rubber and a synthetic rubber.

[8] The rubber composition for a tire according to [7], further containing: more than 0 parts by mass and 90 parts by mass or less of silica produced by wet-process with respect to 100 parts by mass of the total rubber component.

[9] The rubber composition for a tire according to [7] or [8], in which the hydrophilic fumed silica has a BET specific surface area of 50 $m^2/g$ or more and 500 $m^2/g$ or less.

[10] The rubber composition for a tire according to [8] or [9], in which the silica produced by wet-process has a BET specific surface area of 40 $m^2/g$ or more and 220 $m^2/g$ or less.

[11] The rubber composition for a tire according to any one of [7] to [10], containing: the masterbatch according to any one of [1] to [3].

[12] A method for producing a rubber composition for a tire, including: a step of kneading the masterbatch according to [1] to [3] and at least one selected from the group consisting of a natural rubber and a synthetic rubber.

[13] A rubber material for a tire containing: 5 parts by mass or more and 90 parts by mass or less of hydrophilic fumed silica and 1.5 parts by mass or more and 30 parts by mass or less of a silane coupling agent, with respect to 100 parts by mass of a total rubber component containing at least one selected from the group consisting of a natural rubber and a synthetic rubber, in which
a stress at 100% elongation (M100, MPa), a tensile strength at break (TB, MPa), and a tensile elongation at break (EB, %) of the rubber material for a tire satisfy the following relationship:

$$4{,}000 \leq TB \times EB/M100 \leq 13{,}000.$$

[14] The rubber material for a tire according to [13], further containing: more than 0 parts by mass and 90 parts by mass or less of silica produced by wet-process with respect to 100 parts by mass of the total rubber component.
[15] The rubber material for a tire according to [13] or [14], in which the hydrophilic fumed silica has a BET specific surface area of 50 $m^2/g$ or more and 500 $m^2/g$ or less.
[16] The rubber material for a tire according to [14] or [15], in which the silica produced by wet-process has a BET specific surface area of 40 $m^2/g$ or more and 220 $m^2/g$ or less.
[17] A tire including: a tire member made of the rubber material for a tire according to any one of [13] to [16].

Advantageous Effects of Invention

According to the present invention, it is possible to provide a rubber material for a tire having a more excellent balance among wear resistance, fuel efficiency, and a wet grip property, a masterbatch and a rubber composition for a tire suitable for producing the same, methods for producing the masterbatch and the rubber composition for a tire, and a tire including a tire member made of the rubber material for a tire.

Brief Description of Drawings

[Figure 1] Figure 1 is a process diagram of a method for producing a masterbatch according to the present embodiment.
[Figure 2] Figure 2 is a process diagram of a method for producing a rubber material for a tire using the masterbatch according to the present embodiment.

Description of Embodiments

Hereinafter, the present invention will be described in detail in the following order based on a specific embodiment.

1. Masterbatch
    1.1. Rubber Component
    1.2. Hydrophilic Fumed Silica
    1.3. Silane Coupling Agent
    1.4. Other Components
2. Method for Producing Masterbatch
    2.1. Kneader
    2.2. Kneading Step
3. Rubber Composition for Tire
4. Method for Producing Rubber Composition for Tire
5. Rubber Material for Tire
6. Tire

(1. Masterbatch)

A masterbatch according to the present embodiment is a kneaded product used to obtain a rubber material, and contains a rubber component, hydrophilic fumed silica, and a silane coupling agent.
The masterbatch according to the present embodiment is a kneaded product to be kneaded with a blending component containing at least a rubber component. That is, the masterbatch according to the present embodiment is kneaded with another blending component containing at least a rubber component to form a rubber composition for a tire.
A content ratio of the hydrophilic fumed silica to the rubber component in the masterbatch according to the present embodiment is higher than a content ratio of the hydrophilic fumed silica to a total rubber component contained in

the rubber composition for a tire. That is, a concentration of the hydrophilic fumed silica with respect to an amount of the rubber component in the masterbatch according to the present embodiment is higher than a concentration of the hydrophilic fumed silica with respect to an amount of the rubber component in the rubber composition for a tire. In other words, the masterbatch according to the present embodiment is a kneaded product containing the hydrophilic fumed silica at a high concentration.

(1.1. Rubber Component)

The rubber component contained in the masterbatch according to the present embodiment is at least one selected from the group consisting of a natural rubber and a synthetic rubber. That is, the rubber component contained in the masterbatch may contain only a natural rubber, only a synthetic rubber, or both a natural rubber and a synthetic rubber.

When the rubber component contained in the masterbatch contains both a natural rubber and a synthetic rubber, types and contents of the natural rubber and the synthetic rubber may be set according to an application or the like of a rubber material for a tire.

Examples of the natural rubber include a natural rubber (NR) and a modified natural rubber such as an epoxidized natural rubber (ENR), a hydrogenated natural rubber (HNR), a deproteinized natural rubber (DPNR), and a high-purity natural rubber (HPNR). These natural rubbers may be used alone or in combination of two or more types thereof. In the present embodiment, an NR is preferred as the natural rubber.

The NR is not particularly limited, and a general NR in the rubber industry in the related art, such as SIR20, RSS3, and TSR20 can be used.

For example, when the masterbatch contains the natural rubber and the synthetic rubber, a content of the NR in the rubber component (100 parts by mass) contained in the masterbatch is preferably 30 parts by mass or more, and more preferably 40 parts by mass or more, for the reason of improving wear resistance. In addition, the content of the NR is preferably 80 parts by mass or less, and more preferably 75 parts by mass or less, for the reason of exhibiting a balance among tire properties, which are features of the present invention.

As the synthetic rubber, an isoprene rubber (IR), a butadiene rubber (BR), a styrene-butadiene rubber (SBR), a styrene-isoprene-butadiene rubber (SIBR), an ethylene-propylene-diene rubber (EPDM), a chloroprene rubber (CR), an acrylonitrile-butadiene rubber (NBR), or the like can be used. These synthetic rubbers may be used alone or in combination of two or more types thereof. In the present embodiment, an SBR and a BR are preferred as the synthetic rubber.

The SBR is not particularly limited, and examples thereof include an unmodified solution-polymerized SBR (S-SBR), an unmodified emulsion-polymerized SBR (E-SBR), and a modified SBR thereof (modified S-SBR and modified E-SBR).

For example, when the masterbatch contains the natural rubber and the synthetic rubber, a content of the SBR in the rubber component (100 parts by mass) contained in the masterbatch is preferably 10 parts by mass or more, and more preferably 20 parts by mass or more, for the reason of excellent workability during extrusion. In addition, the content of the SBR is preferably 50 parts by mass or less, and more preferably 40 parts by mass or less, for the reason that heat generation inside a tire can be reduced.

The BR is not particularly limited, and for example, a BR containing a syndiotactic polybutadiene crystal can be used. Examples of a product of the BR containing the syndiotactic polybutadiene crystal include a high-cis BR such as BR1220 manufactured by Zeon Corporation and BR130B and BR150B manufactured by Ube Corporation, and VCR412 and VCR617 manufactured by Ube Corporation.

For example, when the masterbatch contains the natural rubber and the synthetic rubber, a content of the BR in the rubber component (100 parts by mass) contained in the masterbatch is preferably 20 parts by mass or more, and more preferably 30 parts by mass or more, for the reason of improving the wear resistance. In addition, the content of the BR is preferably 50 parts by mass or less, and more preferably 40 parts by mass or less, for the reason that heat generation inside the tire can be reduced.

(1.2. Hydrophilic Fumed Silica)

Fumed silica is silicon dioxide in the form of fine particles produced by high temperature hydrolysis of silicon tetrachloride in an oxyhydrogen flame. Therefore, the fumed silica is produced by a method different from that of silica produced by wet-process, and has a smaller primary particle size of a primary aggregate (minimum constituent) and a larger nitrogen adsorption BET specific surface area than the silica produced by wet-process. Particles of the fumed silica are aggregated and fused in the form of beads, which form a bulky agglomerate.

The fumed silica is divided into hydrophilic fumed silica and hydrophobic fumed silica based on a property with respect to water. Silanol groups are present on a surface of the fumed silica. The silanol groups are chemically active and particularly easily react with water. Therefore, a surface treatment (hydrophobization treatment) of lowering reactivity with

water by reacting the silanol groups with another substance may be performed. The fumed silica subjected to a hydrophobization treatment is called hydrophobic fumed silica, and the fumed silica not subjected to a hydrophobization treatment is called hydrophilic fumed silica.

In the present embodiment, the hydrophobic fumed silica and the hydrophilic fumed silica are distinguished from each other by the following modified hydrophobic degree (M value). The modified hydrophobic degree (M value) is a value obtained by a measurement method that utilizes a fact that the hydrophobic fumed silica floats in water but completely suspends in methanol. As a method of measuring the M value, a method described in Examples of International Publication No. WO 2004/099075 can be adopted. When the hydrophobic fumed silica and the hydrophilic fumed silica are expressed using the M value, the hydrophobic fumed silica has an M value of 1 or more, and the hydrophilic fumed silica has an M value of less than 1.

The fumed silica contained in the masterbatch according to the present embodiment is hydrophilic fumed silica. As to be described later, it is considered that the hydrophilic fumed silica forms a structure caused by the fumed silica more easily than the hydrophobic fumed silica. It is considered that since such a structure is present in a rubber material for a tire obtained by vulcanizing the rubber composition for a tire, the wear resistance of the rubber material for a tire is improved. On the other hand, the hydrophobic fumed silica has fewer such structures and tends to have insufficient improvement in wear resistance.

In the present embodiment, by adopting a kneading method to be described later, the hydrophilic fumed silica is sufficiently dispersed in the masterbatch even in a bulky state. Therefore, a tap density of the hydrophilic fumed silica is preferably less than 200 g/L, more preferably 150 g/L or less, and even more preferably 100 g/L or less.

In the present embodiment, the tap density of the hydrophilic fumed silica may be 200 g/L or more, and a compression treatment is usually required to increase the tap density of the hydrophilic fumed silica to 200 g/L or more. Therefore, there is a problem that an extra step is required and a cost is increased.

A lower limit of the tap density of the hydrophilic fumed silica is not particularly limited, and from a viewpoint of production, the lower limit of the tap density is, for example, 30 g/L.

In the present embodiment, a BET specific surface area of the hydrophilic fumed silica is preferably 50 $m^2/g$ or more, 80 $m^2/g$ or more, 120 $m^2/g$ or more, 200 $m^2/g$ or more, 250 $m^2/g$ or more, 300 $m^2/g$ or more, or 350 $m^2/g$ or more. When the BET specific surface area of the fumed silica is within the above range, in the hydrophilic fumed silica, the number of the silanol groups serving as a reaction site with the rubber component or the silane coupling agent can be sufficiently secured. As a result, the hydrophilic fumed silica and the rubber component can be kneaded well.

An upper limit of the BET specific surface area of the hydrophilic fumed silica is not particularly limited, and is, for example, 500 $m^2/g$. When the BET specific surface area of the hydrophilic fumed silica is too small, it is necessary to increase a flame temperature at the time of producing the fumed silica, the structure unique to the fumed silica is lost, and it tends to be impossible to stably produce the fumed silica. When the BET specific surface area of the hydrophilic fumed silica is too large, stable production tends to be impossible.

In the masterbatch, a blending amount of the hydrophilic fumed silica is 13 parts by mass or more to 130 parts by mass or less with respect to 100 parts by mass of the rubber component. That is, the masterbatch according to the present embodiment can contain, at a high concentration, the hydrophilic fumed silica which is difficult to be kneaded and hardly dispersed in the rubber component. Therefore, by producing the rubber composition for a tire using the masterbatch, the rubber material for a tire having excellent wear resistance can be easily obtained.

In the masterbatch, the blending amount of the hydrophilic fumed silica is more preferably 15 parts by mass or more, and even more preferably 20 parts by mass or more, with respect to 100 parts by mass of the rubber component. On the other hand, the blending amount of the hydrophilic fumed silica is more preferably 110 parts by mass or less, and even more preferably 100 parts by mass or less, with respect to 100 parts by mass of the rubber component.

When the blending amount of the hydrophilic fumed silica is too small, wear resistance performance of the obtained rubber material for a tire tends to be insufficient. When the blending amount of the hydrophilic fumed silica is too large, the hydrophilic fumed silica is not sufficiently dispersed in the rubber component, and a good kneaded product tends not to be obtained.

(1.3. Silane Coupling Agent)

When the silane coupling agent is contained in the masterbatch, a crosslinked structure between the hydrophobic rubber component and the hydrophilic fumed silica is easily formed via the silane coupling agent. As a result, dispersibility of the hydrophilic fumed silica in the masterbatch can be improved, and the wear resistance of the rubber material for a tire can be improved.

The silane coupling agent is not particularly limited as long as the silane coupling agent is usually used in the rubber composition. In the present embodiment, a sulfur-containing silane coupling agent is preferred. Examples of the sulfur-containing silane coupling agent include bis-(3-triethoxysilylpropyl) tetrasulfide, bis(3-triethoxysilylpropyl) disulfide, 3-trimethoxysilylpropylbenzothiazole tetrasulfide, γ-mercaptopropyltriethoxysilane, 3-octanoylthiopropyltriethoxysilane,

or a mercapto-thiocarboxylate oligomer.

In the present embodiment, from a viewpoint of heat resistance (heat aging property) of the rubber composition for a tire, the silane coupling agent is preferably a blocked mercaptosilane, and particularly preferably a mercapto-thiocarboxylate oligomer.

The mercapto-thiocarboxylate oligomer is a thiocarboxylate oligomer having a mercapto group. Examples of a molecular structure of the mercapto-thiocarboxylate oligomer are shown below. In the following molecular structure, a sum (x+y) of a repeating number (x) of a linking unit A and a repeating number (y) of a linking unit B is preferably in a range of 3 to 300. Within this range, a mercaptosilane of the linking unit B is covered with $-C_7H_{15}$ of the linking unit A, so that a scorch time can be prevented from being shortened and good reactivity with the hydrophilic fumed silica and the rubber component can be secured. Specific examples of the mercapto-thiocarboxylate oligomer include "NXT-Z45" manufactured by Momentive.

[Chem. 1]

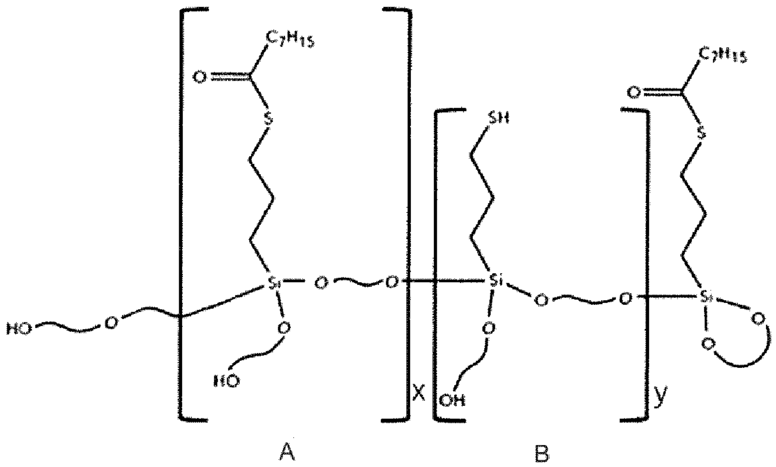

In the masterbatch, a blending amount of the silane coupling agent is 1 part by mass or more and 40 parts by mass or less with respect to 100 parts by mass of the rubber component. When the blending amount of the silane coupling agent is too small, the dispersibility of the hydrophilic fumed silica in the rubber composition for a tire tends to be easily insufficient. When the blending amount of the silane coupling agent is too large, silane coupling agents are easily subjected to condensation, and the wear resistance performance of the obtained rubber material for a tire tends to be insufficient.

In the masterbatch, the blending amount of the silane coupling agent is more preferably 1.5 parts by mass or more, and even more preferably 2 parts by mass or more, with respect to 100 parts by mass of the rubber component. On the other hand, the blending amount of the silane coupling agent is more preferably 30 parts by mass or less, and even more preferably 20 parts by mass or less, with respect to 100 parts by mass of the rubber component.

Within the range of the blending amount of the silane coupling agent with respect to 100 parts by mass of the rubber component, the blending amount of the silane coupling agent is preferably relatively increased as the BET specific surface area of the hydrophilic fumed silica increases. This is because a reaction site with the hydrophilic fumed silica can be sufficiently secured. Specifically, it is particularly preferable to add the silane coupling agent in a range of 0.33 $mg/m^2$ to 1 $mg/m^2$ with respect to the specific surface area of the silica to be added.

By setting the blending amounts of the rubber component, the hydrophilic fumed silica, and the silane coupling agent in the masterbatch to more appropriate ranges, a rubber material for a tire that can realize good fuel efficiency performance in addition to good wear resistance can be easily obtained.

(1.4. Other Components)

In the present embodiment, in addition to the above components (the rubber component, the hydrophilic fumed silica, and the silane coupling agent), the masterbatch may also contain a component to be blended into the rubber composition. Examples of such a component include a lubricant. When the masterbatch contains a lubricant, a kneading property of the masterbatch is improved.

Examples of the lubricant include stearic acid and a process oil. The lubricant may be used alone, or may be used in a combination of two or more types thereof. Examples of the process oil include an aroma oil, a paraffin oil, and a naphthene oil. These may be used alone, or may be used in a combination of two or more types thereof.

A blending amount of the lubricant is not limited as long as an effect of the present invention is obtained. For example, the blending amount of the lubricant is preferably 1 part by mass or more and 40 parts by mass or less with respect to 100 parts by mass of the rubber component. Further, the blending amount of the lubricant is more preferably 2 parts by mass or more, and even more preferably 3 parts by mass or more, with respect to 100 parts by mass of the rubber component. On the other hand, the blending amount of the lubricant is more preferably 35 parts by mass or less, and even more preferably 30 parts by mass or less, with respect to 100 parts by mass of the rubber component.

When the blending amount of the lubricant is too small, there is a concern that the kneading property of the masterbatch is poor and the wear resistance performance of the obtained rubber material for a tire cannot be sufficiently improved. When a blending amount of stearic acid is too large, there is a concern that the hydrophilic fumed silica cannot be sufficiently dispersed in the rubber component due to no shearing during kneading.

Further, the masterbatch may contain a reinforcing filler in addition to the hydrophilic fumed silica. Examples of the reinforcing filler include carbon black, silica produced by wet-process, clay, mica, talc, calcium carbonate, aluminum hydroxide, aluminum oxide, and titanium oxide. When the reinforcing filler is to be blended, a filler coupling agent can also be blended in an appropriate amount. A blending amount of the reinforcing filler is not limited as long as the effect of the present invention can be obtained, and may be a general blending amount.

The masterbatch may further contain various additives such as zinc oxide, an antioxidant, a plasticizer, a processing aid, a liquid polymer, and a thermosetting resin. Blending amounts of these additives are not limited as long as the effect of the present invention can be obtained, and may be general blending amounts.

(2. Method for Producing Masterbatch)

As shown in Figure 1, the masterbatch according to the present embodiment is obtained by kneading the above rubber component, the above hydrophilic fumed silica, the above silane coupling agent, and other components as necessary.

(2.1. Kneader)

In the present embodiment, kneading is performed using a kneader to sufficiently knead the hydrophilic fumed silica into the rubber component and sufficiently disperse the hydrophilic fumed silica in the masterbatch.

In the related art, a Banbury mixer is used to knead silica as the filler into the rubber component and sufficiently disperse the silica in the masterbatch or the rubber composition. The Banbury mixer applies a high shear force to raw materials by rotating a rotor at a high speed while pressurizing the blended raw materials with a weight, and kneads the raw materials. For example, when silica produced by wet-process having a high tap density is kneaded, the Banbury mixer is useful.

However, when the hydrophilic fumed silica having a lower tap density and a higher bulk than silica produced by wet-process is kneaded into the rubber component using the Banbury mixer, the hydrophilic fumed silica is easily scattered. Therefore, there is a problem that an amount of the hydrophilic fumed silica to be actually kneaded is less than a target blending amount. Further, there is a problem that the kneaded hydrophilic fumed silica is likely to agglomerate in the masterbatch or the rubber composition and is not sufficiently dispersed.

Therefore, the present inventors knead the hydrophilic fumed silica into the rubber component using the kneader to prevent the hydrophilic fumed silica during kneading from scattering and to obtain the masterbatch in which the kneaded hydrophilic fumed silica is sufficiently dispersed.

Similar to the Banbury mixer, the kneader is a type of an internal mixer. A difference from the Banbury mixer is a rotor rotation speed. From a viewpoint of improving the productivity, the rotor rotation speed of the Banbury mixer is usually 45 rpm to 80 rpm, whereas the rotor rotation speed of the kneader is 20 rpm to 40 rpm.

It is considered that when the rotor rotation speed is lower than that of the Banbury mixer, the bulky hydrophilic fumed silica is less likely to scatter during kneading in the kneader, and is sufficiently kneaded and dispersed.

It is found by the present inventors that the hydrophilic fumed silica cannot be sufficiently kneaded even if the rotor rotation speed of the Banbury mixer is set to the same degree as the rotor rotation speed of the kneader. It is considered that this is because in the Banbury mixer, the rotor rotation speed suitable for kneading in the Banbury mixer is set, and a rotor structure of the Banbury mixer is optimized such that the kneading proceeds sufficiently within a range of the set rotor rotation speed.

The kneader may be a pressurization type kneader or an open kneader that does not apply a pressure. In the present embodiment, the pressurization type kneader is preferred to sufficiently knead and disperse the hydrophilic fumed silica. A pressurization type kneader capable of performing stepwise pressure control is more preferred.

(2.2. Kneading Step)

In a kneading step, the above rubber component, the above hydrophilic fumed silica, the above silane coupling agent, and other components as necessary are charged into the kneader and kneaded. The rotor rotation speed is 20 rpm to 40 rpm as described above. It is preferable to adjust an amount of cooling water such that a temperature of the kneaded product is in a range of 130°C to 160°C. In a case of the pressurization type kneader, the kneading time is preferably about 20 minutes to 60 minutes. The kneading time in the case of the open kneader is preferably longer than the kneading time in the case of the pressurization type kneader. After completion of the kneading, a masterbatch in which the above components are kneaded is obtained. The masterbatch is a masterbatch containing, at a high concentration, the bulky hydrophilic fumed silica, which is usually difficult to be sufficiently kneaded and dispersed.

(3. Rubber Composition for Tire)

A rubber composition for a tire according to the present embodiment contains at least one (rubber component) selected from the group consisting of a natural rubber and a synthetic rubber, hydrophilic fumed silica, and a silane coupling agent. The natural rubber and the synthetic rubber may be the above natural rubber and synthetic rubber. The same applies to the hydrophilic fumed silica and the silane coupling agent.

When an NR is contained, a content thereof in the total rubber component is preferably 30 parts by mass or more, and more preferably 40 parts by mass or more, for the reason of improving the wear resistance. In addition, the content of the NR is preferably 80 parts by mass or less, and more preferably 75 parts by mass or less, for the reason of exhibiting a balance among tire properties, which are features of the present invention.

When an SBR is contained, a content thereof in the total rubber component is preferably 10 parts by mass or more, and more preferably 20 parts by mass or more, for the reason of excellent workability during extrusion. In addition, the content of the SBR is preferably 50 parts by mass or less, more preferably 40 parts by mass or less, for the reason that heat generation inside the tire can be reduced.

When a BR is contained, a content thereof in the total rubber component is preferably 20 parts by mass or more, and more preferably 30 parts by mass or more, for the reason of improving the wear resistance. In addition, the content of the BR is preferably 50 parts by mass or less, and more preferably 40 parts by mass or less, for the reason that heat generation inside the tire can be reduced.

In the rubber composition for a tire, a blending amount of the hydrophilic fumed silica is 5 parts by mass or more and 90 parts by mass or less with respect to 100 parts by mass of the above rubber component. When the blending amount of the hydrophilic fumed silica is too small, the wear resistance performance of the obtained rubber material for a tire tends to be insufficient. When the blending amount of the hydrophilic fumed silica is too large, the hydrophilic fumed silica is not sufficiently dispersed in the rubber component, and a good kneaded product tends not to be obtained.

In the rubber composition for a tire, the blending amount of the hydrophilic fumed silica is preferably 10 parts by mass or more, and more preferably 15 parts by mass or more with respect to 100 parts by mass of the above rubber component. On the other hand, the blending amount of the hydrophilic fumed silica is preferably 70 parts by mass or less, and more preferably 55 parts by mass or less, with respect to 100 parts by mass of the rubber component.

A range of the BET specific surface area of the hydrophilic fumed silica is preferably the same as the range of the BET specific surface area of the hydrophilic fumed silica contained in the masterbatch described above.

In the rubber composition for a tire, a blending amount of the silane coupling agent is 1.5 parts by mass or more and 30 parts by mass or less with respect to 100 parts by mass of the above rubber component. When the blending amount of the silane coupling agent is too small, dispersibility of a silica compound such as the hydrophilic fumed silica in the rubber composition for a tire tends to be easily insufficient. When the blending amount of the silane coupling agent is too large, there is a concern that silane coupling agents are easily subjected to condensation, and the wear resistance of the obtained rubber material for a tire cannot be sufficiently improved.

In the rubber composition for a tire, the blending amount of the silane coupling agent is preferably 2.0 parts by mass or more, and more preferably 2.5 parts by mass or more, with respect to 100 parts by mass of the above rubber component. On the other hand, the blending amount of the silane coupling agent is preferably 25 parts by mass or less, and more preferably 20 parts by mass or less, with respect to 100 parts by mass of the above rubber component.

By setting the blending amounts of the above rubber component, hydrophilic fumed silica, and silane coupling agent in the rubber composition for a tire to more appropriate ranges, a rubber material for a tire that can realize good fuel efficiency performance in addition to good wear resistance can be easily obtained.

The rubber composition for a tire according to the present embodiment preferably contains the above masterbatch. That is, the rubber composition for a tire according to the present embodiment is preferably produced using the above masterbatch. By using the above masterbatch, a rubber composition for a tire containing a predetermined amount of the hydrophilic fumed silica which is difficult to be kneaded and dispersed is easily obtained.

In the present embodiment, in addition to the above components (the above rubber component, hydrophilic

fumed silica, and silane coupling agent), the rubber composition for a tire may also contain a component to be blended into the rubber composition.

In the present embodiment, the rubber composition for a tire preferably contains silica produced by wet-process. The silica produced by wet-process is generally silica synthesized by a neutralization reaction of sodium silicate and a mineral acid (usually sulfuric acid). The silica produced by wet-process is generally classified into precipitated silica and gel silica. In the present embodiment, the silica produced by wet-process is preferably precipitated silica.

However, the amount of water adsorbed to silanol groups on a surface of the silica produced by wet-process is larger than that of the fumed silica. It is considered that the adsorbed water prevents a crosslinked structure from being formed. Therefore, the amount of the silica produced by wet-process required for an effect caused by the crosslinked structure via the silanol groups is larger than the amount of the fumed silica. In other words, in order to achieve the same effect as the effect achieved by the fumed silica, a blending amount of the silica produced by wet-process is larger than the blending amount of the fumed silica.

Further, since the silica produced by wet-process has a BET specific surface area smaller than the fumed silica, the blending amount of the silica produced by wet-process required to achieve target hardness of the rubber material for a tire tends to be large.

As described above, from a viewpoint of properties of the rubber material for a tire, the blending amount of the silica produced by wet-process is preferably small. On the other hand, the fumed silica is more expensive than the silica produced by wet-process, and thus from a viewpoint of a cost, it is preferable to contain the silica produced by wet-process.

When the rubber composition for a tire contains the silica produced by wet-process, the blending amount of the silica produced by wet-process is preferably more than 0 parts by mass and 90 parts by mass or less, and more preferably more than 0 parts by mass and 70 parts by mass or less, with respect to 100 parts by mass of the rubber component. When the blending amount of the silica produced by wet-process is too large, the silica produced by wet-process is not sufficiently dispersed in the rubber component, and a good kneaded product tends not to be obtained.

In the present embodiment, the BET specific surface area of the silica produced by wet-process is preferably 40 $m^2/g$ or more, 70 $m^2/g$ or more, or 110 $m^2/g$ or more. When the BET specific surface area is 40 $m^2/g$ or more, a sufficient wet grip property tends to be obtained. In addition, the BET specific surface area of the silica produced by wet-process is 220 $m^2/g$ or less, and preferably 200 $m^2/g$ or less. When the BET specific surface area is 220 $m^2/g$ or less, good dispersibility tends to be obtained.

The silica produced by wet-process may be mixed with the fumed silica before the step of kneading with the above rubber component, or may be added in the step of kneading the fumed silica and the above rubber component.

The rubber composition for a tire may contain a process oil. Examples of the process oil include an aroma oil, a paraffin oil, and a naphthene oil. These may be used alone, or may be used in a combination of two or more types thereof. A blending amount of the process oil is preferably 2 parts by mass to 10 parts by mass, and more preferably 4 parts by mass to 8 parts by mass, with respect to 100 parts by mass of the rubber component.

The rubber composition for a tire may contain a reinforcing filler other than the hydrophilic fumed silica and the silica produced by wet-process. Examples of the reinforcing filler include carbon black, clay, mica, talc, calcium carbonate, aluminum hydroxide, aluminum oxide, and titanium oxide. Further, when the reinforcing filler is to be blended, a filler coupling agent can also be blended in an appropriate amount. Blending amounts of these reinforcing fillers may be general blending amounts as long as the effect of the present invention can be obtained.

When carbon black is contained as the reinforcing filler, a blending amount of the carbon black is preferably, for example, more than 0 parts by mass and 60 parts by mass or less with respect to 100 parts by mass of the rubber component.

The rubber composition for a tire may contain various components for a tire such as a vulcanizing agent or a crosslinking agent, a vulcanization accelerator, sulfur, zinc oxide, stearic acid, an antioxidant, a plasticizer, a processing aid, a liquid polymer, and a thermosetting resin. Such components can be blended before or after kneading the rubber composition for a tire, and assists in vulcanization or crosslinking of the rubber composition for a tire. Blending amounts of these components for a tire may be general blending amounts as long as the effect of the present invention can be obtained. For example, a total blending amount of the sulfur and the vulcanization accelerator is preferably 1.5 parts by mass or more and 7 parts by mass or less with respect to 100 parts by mass of the above rubber component.

The rubber composition for a tire according to the present embodiment has an excellent balance among the wear resistance, the fuel efficiency, and the wet grip property, and is thus suitable for a passenger car tire such as an all-season tire or a tire tread thereof.

(4. Method for Producing Rubber Composition for Tire)

As shown in Figure 2, the rubber composition for a tire is preferably obtained by kneading the above masterbatch, the above rubber component, and the above components as necessary. That is, in the present embodiment, the rubber composition for a tire is preferably produced by blending other components into the masterbatch. In addition to the rubber

component contained in the masterbatch, a rubber component is further blended. On the other hand, hydrophilic fumed silica may or may not be further blended.

In the above method for producing a masterbatch, kneading is performed using the kneader, and a kneading machine used for kneading the rubber composition for a tire is not particularly limited. That is, a Banbury mixer or a kneader may be used. Since the kneading is performed using the masterbatch in which the hydrophilic fumed silica is sufficiently kneaded and dispersed, a kneaded product (rubber composition for a tire) can be obtained while maintaining a good dispersion state of the hydrophilic fumed silica even when the kneading is performed using the Banbury mixer. The kneading may be performed using the kneader, and from a viewpoint of improving the productivity, the kneading is preferably performed using the Banbury mixer.

A kneading condition may be a condition under which the masterbatch and respective components are sufficiently kneaded.

The rubber composition for a tire may be produced without using the masterbatch. In this case, as described above, since the hydrophilic fumed silica is bulky, the rubber composition for a tire is produced using the kneader. The rubber composition for a tire may be produced by simultaneously charging all the components into the kneader and kneading them, or may be produced by charging respective components stepwise.

(5. Rubber Material for Tire)

A rubber material for a tire according to the present embodiment is a material obtained by vulcanizing the rubber composition for a tire. Therefore, components contained in the rubber material for a tire and blending amounts of these components are the same as the types and blending amounts of the components (rubber component, hydrophilic fumed silica, silane coupling agent, and the like) contained in the above rubber composition for a tire.

A usual rubber material for a tire only containing carbon black or silica produced by wet-process as a filler has a structure in which a rubber and the carbon black or the silica are cross-linked via sulfur, a structure in which the rubber and the carbon black or the silica are cross-linked via a silane coupling agent, and the like.

On the other hand, the rubber material for a tire according to the present embodiment contains hydrophilic fumed silica derived from the above rubber composition for a tire. It is considered that, in the rubber material for a tire, in addition to a structure in which a rubber component and the hydrophilic fumed silica are crosslinked via sulfur and a structure in which a rubber component and the hydrophilic fumed silica are crosslinked via a silane coupling agent, there is a structure caused by the hydrophilic fumed silica.

It is considered that when a stress is applied to the rubber material for a tire, the structure is broken or connected, and as a result, the stress is dispersed and the wear resistance of the rubber material for a tire is improved.

It is confirmed by the present inventors that the effects described above are smaller for hydrophobic fumed silica.

In the present embodiment, at 23°C, a stress at 100% elongation (M100, MPa), a tensile strength at break (TB, MPa) and a tensile elongation at break (EB, %) of the rubber material for a tire satisfy the following relationship.

$$4{,}000\ (\mathrm{MPa}\cdot\%/\mathrm{MPa}) \leq \mathrm{TB}\times\mathrm{EB}/\mathrm{M100} \leq 13{,}000\ (\mathrm{MPa}\cdot\%/\mathrm{MPa})$$

That is, the rubber material for a tire according to the present embodiment has a relatively high TB and EB, and a relatively low M100. In the related art, the wear resistance of the rubber material for a tire has been evaluated based on a stress at 300% elongation (M300). However, the wear resistance of a tire mounted on a passenger car for traveling is often not correlated with the M300, and the present inventors have found that the M300 is not suitable for evaluation of the wear resistance of the rubber material for a tire. The present inventors have studied a stress-strain curve (SS curve) of the rubber material for a tire, and have found that a rubber material having a low M100 exhibits excellent wear resistance as to be described later as a result of paying attention to elongation at the time of rising of the curve.

That is, it is considered that when dispersion of the filler in the rubber material for a tire is non-uniform and when a strength of reinforcement is non-uniform depending on the density of crosslinking, such a non-uniform structure is a starting point of breakage of the rubber material, and wear progresses. Uniformity of the filler can be measured by a stress (M100) at the time of rising in the stress-strain curve in a tensile test of the rubber material for a tire. This is because the rubber material in which the dispersion of the filler is non-uniform is more likely to apply a force to the non-uniform structure, and the M100 tends to be higher. On the other hand, when the dispersion of the filler is uniform, the structure serving as a starting point of the stress is sparse, so that the stress is hardly applied, and the M100 tends to decrease.

Therefore, by uniformly dispersing (finely dispersing) the filler, particularly the hydrophilic fumed silica which is difficult to disperse, the M100 of the rubber material is lowered, and the wear resistance is improved. In addition, when the filler is uniformly dispersed, a structure serving as the starting point of breakage in the rubber material is reduced, the strength at break (TB) and the elongation at break (EB) are improved, and the wear resistance is improved.

Furthermore, when TB×EB/M100 (MPa·%/MPa) is within the above range, fuel efficiency and a wet grip property of the rubber material for a tire are also preferably influenced.

In the present embodiment, TB×EB/M100 is more preferably 4,400 MPa·%/MPa or more and 11,000 MPa·%/MPa or less, and even more preferably 5,600 MPa·%/MPa or more and 9,000 MPa·%/MPa or less.

In addition, the M100 is preferably 1.5 MPa or more and 5.5 MPa or less, more preferably 1.7 MPa or more and 5.0 MPa or less, and even more preferably 1.9 MPa or more and 4.5 MPa or less. When the M100 is within the above range, the wear resistance of the rubber material for a tire is improved.

The M100, the TB, and the EB can be measured in accordance with JIS K6251. Detailed measurement methods will be described in Examples.

A hardness of the rubber material for a tire is preferably 55 or more and 75 or less. The A hardness of the rubber material for a tire varies depending on an application of a tire, and when the A hardness of the rubber material for a tire is within the above range, the rubber material for a tire can be suitably applied to various types of tires. The A hardness of the rubber material for a tire is more preferably 58 or more and 73 or less, and even more preferably 60 or more and 71 or less.

(6. Tire)

A tire according to the present embodiment includes a tire member made of the above rubber material for a tire. Accordingly, the tire according to the present embodiment can exhibit a high level of balance among the wear resistance performance, the fuel efficiency performance, and the wet grip performance. Therefore, the tire according to the present embodiment can be suitably applied to a passenger car tire such as an all-season tire. Examples of the tire member made of the above rubber material for a tire include a tread, a base tread, a sidewall, and a clinch, and in particular, and a tire member to be in contact with the ground in the tire is preferred.

Although the embodiment of the present invention has been described above, the present invention is not limited to the above embodiment, and may be modified in various modes within the scope of the present invention.

Although the rubber composition for a tire and the rubber material for a tire have been described above, the rubber composition for a tire and the rubber material for a tire may be used for an application in addition to a tire. For example, the rubber material for a tire may be used for a fender, a conveyor belt, an anti-vibration rubber, a rubber crawler, or a rubber glove.

Examples

Hereinafter, the present invention will be described in more detail in Examples. However, the present invention is not limited to the following Examples.

(Experiment 1)

(Preparation of Masterbatch)

The following components were charged into a pressurization kneader having a volume of 0.5 L such that blending amounts with respect to 100 parts by mass of a rubber component were blending amounts as shown in Table 1. After charging, the components were kneaded for about 30 minutes at a rotor rotation speed in a range of 20 rpm to 40 rpm in a temperature of a kneaded product in a range of 130°C to 160°C. An air cylinder pressure was 0.7 MPa. After completion of the kneading, cooling to room temperature was performed, and a kneaded product was taken out to obtain a masterbatch.

(A) Rubber component

(A-1) Natural rubber SVR made in Vietnam
(A-2) SBR (E581, manufactured by Asahi Kasei Corporation)
(A-3) BR (BR01, manufactured by JSR Corporation)

(B) Filler

(B-1) Hydrophilic fumed silica (Reolosil, QS-30C manufactured by Tokuyama Corporation, nitrogen adsorption BET specific surface area: 300 $m^2/g$, tap density: 100 g/L)
(B-2) Precipitated silica (NipsilAQ, manufactured by Tosoh Silica Corporation, nitrogen adsorption BET specific surface area: 200 $m^2/g$, tap density: 300 g/L)
(B-3) Carbon black (SEAST 6, manufactured by Tokai Carbon Co., Ltd., nitrogen adsorption BET specific surface

area: 120 $m^2$/g, tap density: 400 g/L)

(C) Silane coupling agent

(C-1) Mercapto-thiocarboxylate oligomer (NXT-Z45, manufactured by Momentive)
(C-2) Bis-(3-triethoxysilylpropyl) disulfide (Si75, manufactured by Evonik)

(D) Other components

(D-1) Lubricant (stearic acid, Beads Stearic Acid YR, manufactured by NOF Corporation)
(D-2) Process oil (Aromax 3 (TDAE Oil), manufactured by Fuji Kosan Co., Ltd.)
(D-3) Antioxidant (OZONONE 6C, manufactured by Seiko Chemical Co., Ltd.)

[Table 1]

| | | | Standard Production Example 1 | Production Example 1 | Production Example 2 |
|---|---|---|---|---|---|
| Blending of masterbatch | Rubber component | A-1 | 100 | 100 | 100 |
| | | A-2 | - | - | - |
| | | A-3 | - | - | - |
| | Filler | B-1 | - | 64 | 90 |
| | | B-2 | 64 | - | - |
| | | B-3 | 3 | 3 | 3 |
| | Silane coupling agent | C-1 | - | 12.8 | 18 |
| | | C-2 | 6.4 | - | - |
| | Other components | D-1 | 6 | 6 | 6 |
| | | D-2 | 4 | 4 | 4 |
| | | D-3 | 1 | 1 | 1 |

(Preparation of Rubber Composition for Tire)

The obtained masterbatch and, if necessary, the above components and the following (D-4) and (D-5) were charged into an internal Banbury mixer having a volume of 1.7 L. After charging, the above components were kneaded for about 10 minutes at a rotor rotation speed in a range of 45 rpm to 80 rpm in a temperature of a kneaded product in a range of 130°C to 160°C. A ram pressure during the kneading was in a range of 0.5 MPa to 4.0 MPa. After completion of the kneading, cooling to room temperature was performed, and a kneaded product was obtained.

(D) Other components

(D-4) Lubricant (zinc oxide: zinc oxide Type III, manufactured by SEIDO Chemical Industry Co., Ltd.)

(D-5) Sulfur (Gold Flower brand oil-containing sulfur powder, manufactured by Tsurumi Chemical Industry Co., Ltd.)

The following (D-6) and (D-7) were added to the obtained kneaded product, followed by mixing using a 6-inch roll testing machine to obtain a rubber composition for a tire. Blending in the obtained rubber composition for a tire is shown in Table 2. For Standard Examples 1 to 5, the masterbatch in Standard Production Example 1 was used, for Examples 1 to 8, 10, and 11, the masterbatch in Production Example 1 was used, and for Examples 9 and 12, the masterbatch in Production Example 2 was used.

(D) Other components

(D-6) Vulcanization accelerator (N-cyclohexyl-2-benzothiazole sulfenamide (abbreviation: CBS), Sanceler CM-G, manufactured by Sanshin Chemical Industry Co., Ltd.)
(D-7) Vulcanization accelerator (1,3-diphenylguanidine (abbreviation: DPG), Sanceler D, manufactured by Sanshin Chemical Industry Co., Ltd.)

| | | | Standard Example 1 | Example 1 | Standard Example 2 | Example 2 | Example 3 | Standard Example 3 | Example 4 | Example 5 | Example 6 | Standard Example 4 | Example 7 | Example 8 | Example 9 | Standard Example 5 | Example 10 | Example 11 | Example 12 |
|---|---|---|---|---|---|---|---|---|---|---|---|---|---|---|---|---|---|---|---|
| Blending of rubber composition for tire | Rubber component | A-1 | 50 | 50 | 50 | 50 | 50 | 50 | 50 | 50 | 50 | 50 | 50 | 50 | 50 | 50 | 50 | 50 | 50 |
| | | A-2 | 27,5 | 27,5 | 27,5 | 27,5 | 27,5 | 27,5 | 27,5 | 27,5 | 27,5 | 27,5 | 27,5 | 27,5 | 27,5 | 27,5 | 27,5 | 27,5 | 27,5 |
| | | A-3 | 30 | 30 | 30 | 30 | 30 | 30 | 30 | 30 | 30 | 30 | 30 | 30 | 30 | 30 | 30 | 30 | 30 |
| | Filler | B-1 | - | 32 | - | 22 | 32 | - | 12,0 | 22,0 | 36,5 | - | 12,0 | 22,0 | 45,0 | - | 12,0 | 22,0 | 45,0 |
| | | B-2 | 75 | 43 | 75 | 53 | 43 | 75 | 63,0 | 53,0 | 38,5 | 75 | 63,0 | 53,0 | 30,0 | 75 | 63,0 | 53,0 | 30,0 |
| | | B-3 | 5 | 5 | 5 | 5 | 5 | 5 | 5 | 5 | 5 | 5 | 5 | 5 | 5 | 5 | 5 | 5 | 5 |
| | Silane coupling agent | C-1 | - | 6,4 | - | 4,4 | 6,4 | - | 2,4 | 4,4 | 7,3 | - | 2,4 | 4,4 | 9,0 | - | 2,4 | 4,4 | 9,0 |
| | | C-2 | 7,5 | 4,3 | 7,5 | 5,3 | 4,3 | 7,5 | 6,2 | 5,2 | 3,9 | 7,5 | 6,3 | 5,2 | 3,1 | 7,5 | 6,3 | 5,3 | 3,0 |
| | Other components | D-1 | 3,0 | 3,0 | 3,0 | 3,0 | 3,0 | 3,0 | 3,0 | 3,0 | 3,0 | 3,0 | 3,0 | 3,0 | 3,0 | 3,0 | 3,0 | 3,0 | 3,0 |
| | | D-2 | 42,5 | 42,5 | 27,5 | 34,4 | 37,5 | 27,5 | 15,4 | 21,9 | 31,4 | 18,0 | 19,5 | 20,8 | 23,7 | 11,6 | 13,8 | 15,7 | 20,0 |
| | | D-3 | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 | 2,0 |
| | | D-4 | 3,0 | 3,0 | 3,0 | 3,0 | 3,0 | 3,0 | 3,0 | 3,0 | 3,0 | 3,0 | 3,0 | 3,0 | 3,0 | 3,0 | 3,0 | 3,0 | 3,0 |
| | | D-5 | 2,3 | 2,3 | 2,3 | 2,3 | 2,3 | 2,3 | 2,3 | 2,3 | 2,3 | 2,3 | 2,3 | 2,3 | 2,3 | 2,3 | 2,3 | 2,3 | 2,3 |
| | | D-6 | 1,8 | 1,8 | 1,8 | 1,8 | 1,8 | 1,8 | 1,8 | 1,8 | 1,8 | 1,8 | 1,8 | 1,8 | 1,8 | 1,8 | 1,8 | 1,8 | 1,8 |
| | | D-7 | 0,5 | 0,5 | 0,5 | 0,5 | 0,5 | 0,5 | 0,5 | 0,5 | 0,5 | 0,5 | 0,5 | 0,5 | 0,5 | 0,5 | 0,5 | 0,5 | 0,5 |
| Rubber composition for tire | Mooney viscosity (ML1+4, 100°C) | | 38 | 37 | 46 | 43 | 41 | 49 | 48 | 48 | 47 | 61 | 59 | 57 | 54 | 70 | 67 | 64 | 57 |
| Rubber composition for tire | A hardness | | 57 | 57 | 63 | 63 | 63 | 65 | 65 | 65 | 65 | 70 | 70 | 70 | 70 | 73 | 73 | 73 | 73 |
| | Rolling resistance | | 1,00 | 1,00 | 1,00 | 1,06 | 1,09 | 1,00 | 1,03 | 1,06 | 1,10 | 1,00 | 1,03 | 1,06 | 1,12 | 1,00 | 1,03 | 1,06 | 1,14 |
| | Wear resistance | 40 N | 1,00 | 1,09 | 1,00 | 1,15 | 1,23 | 1,00 | 1,04 | 1,08 | 1,14 | 1,00 | 1,04 | 1,07 | 1,16 | 1,00 | 1,05 | 1,09 | 1,19 |
| | | 20 N | 1,00 | 1,13 | 1,00 | 1,07 | 1,11 | 1,00 | 1,07 | 1,14 | 1,26 | 1,00 | 1,06 | 1,11 | 1,25 | 1,00 | 1,06 | 1,11 | 1,26 |
| | Wet grip property | | 1,00 | 1,06 | 1,00 | 1,0 | 1,00 | 1,00 | 1,02 | 1,03 | 1,05 | 1,00 | 1,02 | 1,04 | 1,08 | 1,00 | 1,03 | 1,05 | 1,10 |
| | M100 | | 1,5 | 1,6 | 2,0 | 1,9 | 1,9 | 2,4 | 2,3 | 2,2 | 2,0 | 2,9 | 2,8 | 2,7 | 2,3 | 3,3 | 3,1 | 2,9 | 2,5 |
| | TB×EB/M100 | | 9638 | 8246 | 5504 | 5889 | 5913 | 5363 | 5948 | 6496 | 7613 | 4324 | 4770 | 5168 | 6665 | 3748 | 4253 | 4763 | 6147 |
| Tire | Wear resistance | | 1,00 | 1,11 | 1,00 | 1,14 | 1,19 | 1,00 | 1,09 | 1,12 | 1,30 | 1,00 | 1,06 | 1,05 | 1,24 | 1,00 | 1,10 | 1,10 | 1,25 |

A test piece for performing the following evaluations on the obtained rubber composition for a tire was prepared. The obtained test piece was used to evaluate the following physical properties.

(Workability: Mooney viscosity)

A Mooney viscosity at 100°C (ML1+4, 100°C) of the obtained test piece made of the rubber composition for a tire was measured in accordance with JIS K6300-1 using a Mooney viscosity meter (VR-1132 manufactured by Ueshima Seisakusho Co., Ltd.). When the Mooney viscosity is low, the workability of the rubber composition for a tire tends to be good. The results are shown in Table 2.

(Preparation of Rubber Material for Tire)

Subsequently, the obtained rubber composition for a tire was press-vulcanized at 160°C for 10 minutes to obtain a rubber material for a tire. A test piece for performing the following evaluations on the obtained rubber material for a tire was prepared. The obtained test piece was used to evaluate the following physical properties.

(A hardness)

A hardness (Shore A hardness) of the obtained test piece made of the rubber material for a tire was measured in accordance with JIS K6253 Type A by a durometer. The target A hardness of the rubber material for a tire varies depending on an application of a tire. In the present example, the A hardness of the test piece was changed in Standard Examples and

Examples, and the hardness was adjusted to be approximately the same. The results are shown in Table 2.

(M100)

The obtained test piece was processed into a No. 3 dumbbell-shaped test piece, and a tensile test was carried out at a tensile speed of 500 mm/min in accordance with JIS K6251. In the tensile test, a stress at 100% elongation at 23°C ± 2°C (M100, MPa) was measured.

(Breakage property)

The obtained test piece was processed into a No. 3 dumbbell-shaped test piece, and a tensile test was carried out at a tensile speed of 500 mm/min in accordance with JIS K6251. In the tensile test, a tensile strength at break (TB, MPa) and a tensile elongation at break (EB, %) at 23°C ± 2°C were measured.

Based on the measured values of M100, TB, and EB obtained above, TB×EB/M100 (MPa·%/MPa) was calculated. The results are shown in Table 2.

(Fuel efficiency performance: tanδ at 60°C)

The obtained test piece made of the rubber material for a tire was measured in accordance with JIS K6394 using a dynamic viscoelasticity tester (VR-7130 manufactured by Ueshima Seisakusho Co., Ltd.) under the following conditions. Tanδ (60°C) was calculated based on a measured value at 60°C.

Measurement temperature: 60°C
Static strain: 10%
Dynamic strain: ± 2%
Frequency: 10 Hz

A rolling resistance index was calculated according to the following calculation equation for Examples having the same A hardness, with the calculated tanδ (60°C) in Standard Examples 1 to 5 being set to 1.0. For example, the rolling resistance indexes in Examples 4 to 6 were calculated, with the calculated tanδ (60°C) in Standard Example 3 being set to 1.0. The larger the index, the better the rolling resistance. The results are shown in Table 2.

(Rolling resistance index) = (tanδ (60°C) in Standard Example)/(tanδ (60°C) in Example)

(Wear resistance performance: FPS wear amount)

An FPS wear amount of the obtained test piece made of the rubber material for a tire was measured using an FPS wear tester (AB-2012 manufactured by Ueshima Seisakusho Co., Ltd.) under conditions including a temperature of 20°C, a load of 20 N and 40 N, a slip ratio of 10%, and a test time of 2 minutes. A volume loss was calculated based on the FPS wear amount, and a wear index was calculated according to the following calculation equation for Examples having the same A hardness, with loss amounts in Standard Examples 1 to 5 being set to 1.0. The larger the index, the better the wear resistance performance. The results are shown in Table 2.

(Wear index) = (loss amount in Standard Example)/(loss amount in Example)

(Wet grip performance: tanδ at 0°C)

The obtained test piece made of the rubber material for a tire was measured in accordance with JIS K6394 using a dynamic viscoelasticity tester (VR-7130 manufactured by Ueshima Seisakusho Co., Ltd.) under the following conditions. Tanδ (0°C) was calculated based on a measured value at 0°C.

Measurement temperature: 0°C
Static strain: 10%
Dynamic strain: ± 2%
Frequency: 10 Hz

A wet grip index was calculated according to the following calculation equation for Examples having the same A hardness, with the calculated tanδ (0°C) in Standard Examples 1 to 5 being set to 1.0. The higher the index, the better the wet grip property. The results are shown in Table 2.

$$\text{(Wet grip index)} = (\tan\delta\ (0°C)\ \text{in Example})/(\tan\delta\ (0°C)\ \text{in Standard Example})$$

(Tire wear resistance)

A tire is prototyped by using a retreading method in which a tread made of the obtained rubber composition for a tire is attached to a base tire by vulcanization adhesion. A size of the tire is 11R22.5. The prototype tire is mounted to a trail portion of a truck trailer and subjected to a wear test, and a wear index is calculated according to the following calculation equation for Examples having the same A hardness based on the wear volume after 10,000 km of travel, with a wear volume of each Standard Example being set to 1.0. The larger the index, the better the wear resistance performance. The results are shown in Table 2.

$$\text{(Wear index)} = (\text{wear volume in Standard Example})/(\text{wear volume in Example})$$

From Table 2, it was confirmed that the rubber material for a tire which contains the hydrophilic fumed silica and in which the M100, the TB, and the EB satisfy the above relationship has a more excellent balance among the wear resistance, the fuel efficiency and the wet grip property than a rubber material for a tire which does not contain hydrophilic fumed silica and in which the M100, the TB, and the EB do not satisfy the above relationship.

It is confirmed that that a wear property of a tire using a tire material that contains the hydrophilic fumed silica and in which the M100, the TB, and the EB satisfy the above relationship as a tread is superior to a wear property of a tire using a tire material which does not contain hydrophilic fumed silica and in which the M100, the TB, and the EB do not satisfy the above relationship as a tread.

**Claims**

**1.** A masterbatch comprising:
13 parts by mass or more and 130 parts by mass or less of hydrophilic fumed silica and 1 part by mass or more and 40 parts by mass or less of a silane coupling agent, with respect to 100 parts by mass of a rubber component containing at least one selected from the group consisting of a natural rubber and a synthetic rubber.

**2.** The masterbatch according to claim 1, wherein
the hydrophilic fumed silica has a BET specific surface area of 50 $m^2/g$ or more and 500 $m^2/g$ or less.

**3.** The masterbatch according to claim 1 or 2, further comprising:
1 part by mass or more and 40 parts by mass or less of a lubricant with respect to 100 parts by mass of the rubber component.

**4.** A method for producing a masterbatch, comprising:
a step of kneading, using a kneader, a rubber component, hydrophilic fumed silica, and a silane coupling agent.

**5.** The method for producing a masterbatch according to claim 4, wherein
the hydrophilic fumed silica has a BET specific surface area of 50 $m^2/g$ or more and 500 $m^2/g$ or less.

**6.** The method for producing a masterbatch according to claim 4 or 5, further comprising:
kneading a lubricant.

**7.** A rubber composition for a tire, comprising:
5 parts by mass or more and 90 parts by mass or less of hydrophilic fumed silica and 1.5 parts by mass or more and 30 parts by mass or less of a silane coupling agent, with respect to 100 parts by mass of a total rubber component containing at least one selected from the group consisting of a natural rubber and a synthetic rubber.

**8.** The rubber composition for a tire according to claim 7, further comprising:
more than 0 parts by mass and 90 parts by mass or less of silica produced by wet-process with respect to 100 parts by mass of the total rubber component.

**9.** The rubber composition for a tire according to claim 7 or 8, wherein
the hydrophilic fumed silica has a BET specific surface area of 50 $m^2/g$ or more and 500 $m^2/g$ or less.

**10.** The rubber composition for a tire according to claim 8, wherein
the silica produced by wet-process has a BET specific surface area of 40 $m^2/g$ or more and 220 $m^2/g$ or less.

**11.** The rubber composition for a tire according to claim 7, comprising:
the masterbatch according to claim 1 or 2.

**12.** A method for producing a rubber composition for a tire, comprising:
a step of kneading the masterbatch according to claim 1 or 2 and at least one selected from the group consisting of a natural rubber and a synthetic rubber.

**13.** A rubber material for a tire, comprising:

5 parts by mass or more and 90 parts by mass or less of hydrophilic fumed silica and 1.5 parts by mass or more and 30 parts by mass or less of a silane coupling agent, with respect to 100 parts by mass of a total rubber component containing at least one selected from the group consisting of a natural rubber and a synthetic rubber, wherein a stress at 100% elongation (M100, MPa), a tensile strength at break (TB, MPa), and a tensile elongation at break (EB, %) of the rubber material for a tire satisfy the following relationship:

$$4{,}000 \leq TB \times EB/M100 \leq 13{,}000.$$

**14.** The rubber material for a tire according to claim 13, further comprising:
more than 0 parts by mass and 90 parts by mass or less of silica produced by wet-process with respect to 100 parts by mass of the total rubber component.

**15.** The rubber material for a tire according to claim 13 or 14, wherein
the hydrophilic fumed silica has a BET specific surface area of 50 $m^2/g$ or more and 500 $m^2/g$ or less.

**16.** The rubber material for a tire according to claim 14, wherein
the silica produced by wet-process has a BET specific surface area of 40 $m^2/g$ or more and 220 $m^2/g$ or less.

**17.** A tire comprising:
a tire member made of the rubber material for a tire according to claim 13 or 14.

[Figure 1]

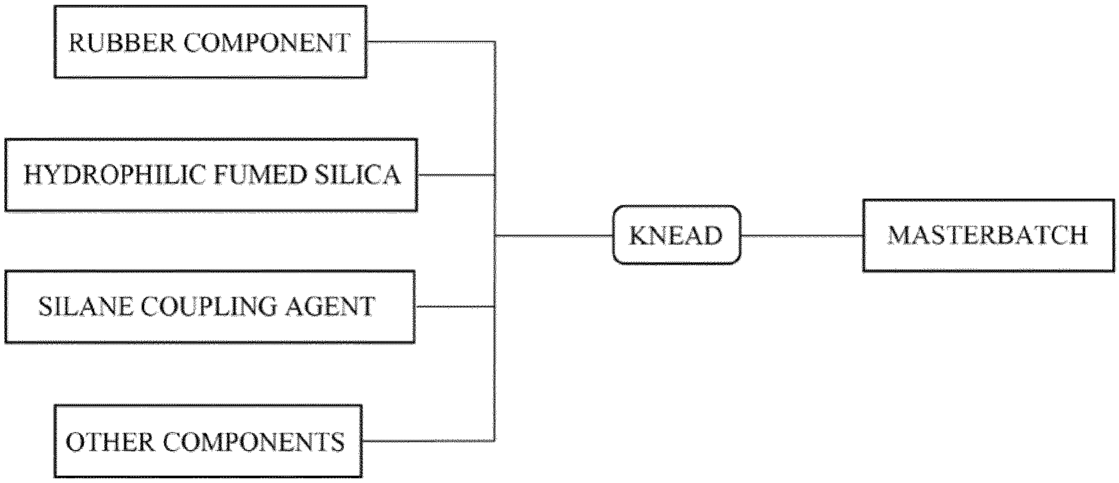


[Figure 2]

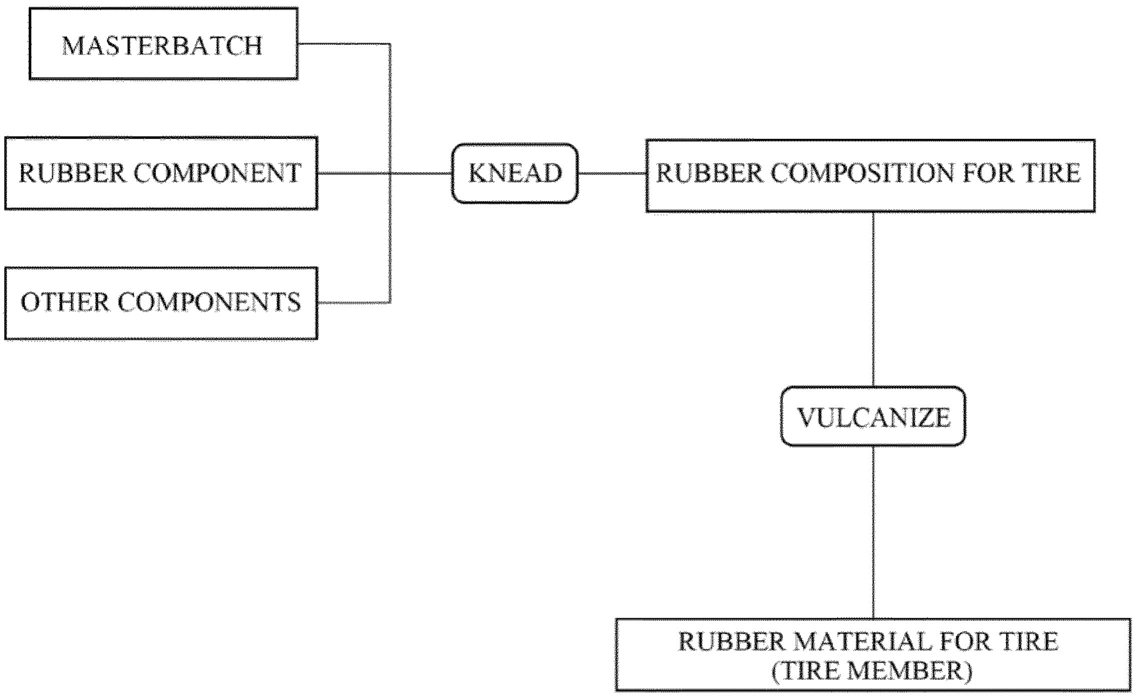

## INTERNATIONAL SEARCH REPORT

International application No.
**PCT/JP2023/036871**

**A. CLASSIFICATION OF SUBJECT MATTER**

***C08J 3/22***(2006.01)i; ***B60C 1/00***(2006.01)i; ***C08K 3/36***(2006.01)i; ***C08K 5/54***(2006.01)i; ***C08L 21/00***(2006.01)i
FI: C08J3/22 CEQ; B60C1/00 Z; C08K3/36; C08K5/54; C08L21/00

According to International Patent Classification (IPC) or to both national classification and IPC

**B. FIELDS SEARCHED**

Minimum documentation searched (classification system followed by classification symbols)

C08J3/22; B60C1/00; C08K3/36; C08K5/54; C08L21/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2015-183061 A (THE YOKOHAMA RUBBER CO., LTD.) 22 October 2015 (2015-10-22) claims, paragraphs [0005], [0025], [0028], [0038]-[0055], tables 2-3, examples 1, 2, 4-6, 8 | 1-17<br>4-6 |
| X<br>Y | JP 2015-183062 A (THE YOKOHAMA RUBBER CO., LTD.) 22 October 2015 (2015-10-22) claims, paragraphs [0005], [0009], [0035], [0037]-[0056], tables 2, 3, examples 1-8 | 1-17<br>4-6 |
| X<br>Y | WO 2022/091953 A1 (TOKUYAMA CORP.) 05 May 2022 (2022-05-05) claims, paragraphs [0049]-[0080], tables 1-3, examples 2-4, 4 to 2-7 | 1-3, 7-17<br>4-6 |
| X<br>Y | JP 2016-037602 A (THE YOKOHAMA RUBBER CO., LTD.) 22 March 2016 (2016-03-22) claims, paragraphs [0005], [0031]-[0053], tables 1-3, examples 5-8 | 1-3, 7-17<br>4-6 |
| X | JP 2003-192842 A (SUMITOMO RUBBER IND., LTD.) 09 July 2003 (2003-07-09) claims, paragraphs [0005], [0035]-[0048], tables 1, 2, examples 3, 5, 8, 10 | 7-10, 13-17 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 December 2023** | **16 January 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

INTERNATIONAL SEARCH REPORT

International application No.
PCT/JP2023/036871

C. DOCUMENTS CONSIDERED TO BE RELEVANT

| Category* | Citation of document, with indication, where appropriate, of the relevant passages | Relevant to claim No. |
|---|---|---|
| P, X | WO 2023/054510 A1 (TOKUYAMA CORP.) 06 April 2023 (2023-04-06) claims, examples, entire text | 1-17 |

Form PCT/ISA/210 (second sheet) (January 2015)

**INTERNATIONAL SEARCH REPORT**
**Information on patent family members**

International application No.
**PCT/JP2023/036871**

| Patent document cited in search report | Publication date (day/month/year) | Patent family member(s) | Publication date (day/month/year) |
| --- | --- | --- | --- |
| JP 2015-183061 A | 22 October 2015 | (Family: none) | |
| JP 2015-183062 A | 22 October 2015 | (Family: none) | |
| WO 2022/091953 A1 | 05 May 2022 | JP 2022-72813 A | |
| | | EP 4219615 A1<br>claims, paragraphs [0049]-[0080], tables 1-3, examples 2-4 to 2-7 | |
| | | JP 2022-76586 A | |
| | | CN 116490558 A | |
| | | KR 10-2023-0098174 A | |
| | | TW 202222689 A | |
| JP 2016-037602 A | 22 March 2016 | (Family: none) | |
| JP 2003-192842 A | 09 July 2003 | (Family: none) | |
| WO 2023/054510 A1 | 06 April 2023 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005213353 A
- JP 2018150420 A
- JP 2012158661 A
- WO 2018128141 A
- WO 2004099075 A